# EUROPÄISCHE PATENTSCHRIFT

(11) **EP 2 452 104 B1**
(45) Veröffentlichungstag und Bekanntmachung des Hinweises auf die Patenterteilung: **06.03.2013**
(21) Anmeldenummer: 10731489.0
(22) Anmeldetag: 29.06.2010
(51) Int. Cl.: F16K 1/42

(54) **VENTIL**
VALVE
VANNE

(30) Priorität: 08.07.2009 DE 102009027527
(43) Veröffentlichungstag der Anmeldung: 16.05.2012
(73) Patentinhaber: Robert Bosch GmbH, 70442 Stuttgart (DE)
(72) Erfinder: PFETZER, Johannes, 77815 Buehl (DE); KOTLARSKI, Thomas, 77815 Buehl (DE); SCHOENEMANN, Anja, 77815 Buehl (DE); SCHMID, Joerg, 77855 Achern (DE); MAHFOUDH, Samir, 77815 Buehl (DE)
(86) Internationale Anmeldenummer: PCT/EP2010/059169
(87) Internationale Veröffentlichungsnummer: WO 2011/003769

(56) Entgegenhaltungen:
- EP-A1- 0 882 916
- DE-A1- 2 404 174
- DE-A1- 3 817 140
- DE-A1- 4 118 190
- GB-A- 917 174
- GB-A- 2 037 947
- US-A- 4 176 679
- US-A1- 2002 179 146
- US-A1- 2007 045 587

## Beschreibung

Die vorliegende Erfindung betrifft ein Ventil, welches ein Gehäuse, ein ringförmiges Dichtelement und ein bewegbares Schließelement aufweist.

### Stand der Technik

Ventile werden dazu eingesetzt, um den Volumenstrom von Gasen und Flüssigkeiten zu steuern. Ein mögliches Einsatzgebiet ist zum Beispiel der Kühlkreislauf eines Kraftfahrzeugs, bei dem mit Hilfe einer Kühlflüssigkeit der Motor des Kraftfahrzeugs gekühlt sowie die aufgewärmte Kühlflüssigkeit gegebenenfalls für die Fahrzeugheizung verwendet wird. Die Verteilung des Kühlmittels auf verschiedene Zweige des Kühl- bzw. Heizungskreislaufs wird mit Hilfe von elektrisch ansteuerbaren Ventilen gesteuert.

Ein herkömmliches Ventil in einem Kühlkreislauf eines Kraftfahrzeugs weist ein Ventilgehäuse und innerhalb des Gehäuses ein ringförmiges Dichtelement und ein als Dichtkegel ausgebildetes Schließelement auf. Das Dichtelement ist über eine Abstandshülse gegen einen Anschlag des Gehäuses verspannt. Das Schließelement ist mit einer innerhalb des Gehäuses verschiebbar gelagerten Hubstange verbunden, über welche das Schließelement an das Dichtelement angelegt werden kann, um das Ventil zu schließen. Die Hubstange ist weiter an einer Zugfeder befestigt, welche eine das Schließelement von dem Dichtelement wegziehende Kraft auf die Hubstange ausübt.

Zum Betätigen des Ventils ist ein an dem Gehäuse angeordnetes Joch und ein mit der Hubstange verbundener Anker vorgesehen. Zwischen Anker und Joch ist eine gegen die Federkraft und gegen einen (durch eine Pumpe erzeugten) Kühlmitteldruck wirkende elektromagnetische Anziehungskraft erzeugbar, wodurch ein Öffnen und Schließen des Ventils gesteuert werden kann. Bei geschlossenem Zustand des Ventils weisen Anker und Joch üblicherweise einen Restabstand zueinander auf.

Bei dem Ventil können hohe Kühlmitteltemperaturen das Schließverhalten beeinträchtigen. Problematisch ist insbesondere eine Wärmeausdehnung des ringförmigen Dichtelements, deren axiale Komponente bei geschlossenem Ventil zu einer Erhöhung des Restabstands zwischen Anker und Joch führt. Dies ist verbunden mit einer Verkleinerung der elektromagnetischen Schließkraft, wodurch das Ventil eine Undichtigkeit aufweisen kann.

Aus der GB 917 174 A ist ein Ventil bekannt, welches ein Gehäuse, und innerhalb des Gehäuses ein ringförmiges Dichtelement und ein bewegbares Schließelement aufweist. Im Bereich einer Außenseite des Dichtelements ist ein Hohlraum vorgesehen.

Weitere Ventile mit einem solchen Aufbau sind in den Druckschriften DE 38 17 140 A1, DE 41 18 190 A1 und GB 2 037 947 A beschrieben.

Die US 2007/0045587 A1 beschreibt ein Ventil mit einem ringförmigen Dichtelement und einem Schließelement, welche innerhalb eines Gehäuses angeordnet sind. Das Dichtelement weist außenseitig einen Vorsprung bzw. Grat auf, mit dessen Hilfe das Dichtelement an dem Gehäuse fixiert wird. Dies kann durch Eindrücken bzw. Einstechen des Vorsprungs in eine Gehäusewand erfolgen.

Die Druckschriften US 2002/0179146 A1, DE 24 04 174 A1 und US 4,176,679 A zeigen Ventile, welche ein Gehäuse, und innerhalb des Gehäuses ein Dichtelement in Form eines O-Rings und ein Schließelement aufweisen.

Aus der EP 0 882 916 A1 ist ein Ventil mit einem Gehäuse bekannt, innerhalb dessen ein ringförmiges Dichtelement und ein Schließelement angeordnet sind.

### Offenbarung der Erfindung

Die Aufgabe der vorliegenden Erfindung besteht darin, ein verbessertes Ventil bereitzustellen, welches ein besseres und robusteres Schließverhalten, insbesondere bei hohen Temperaturen, ermöglicht.

Diese Aufgabe wird durch ein Ventil gemäß Anspruch 1 gelöst. Weitere vorteilhafte Ausführungsformen der Erfindung sind in den abhängigen Ansprüchen angegeben.

Erfindungsgemäß wird ein Ventil vorgeschlagen, welches ein Gehäuse, ein ringförmiges Dichtelement und ein bewegbares Schließelement aufweist. Das Dichtelement und das Schließelement sind innerhalb des Gehäuses angeordnet. Das Ventil ist durch Anlegen des Schließelements an das Dichtelement verschließbar. Das Ventil zeichnet sich durch einen Hohlraum im Bereich einer Außenseite des Dichtelements aus, in welchen ein Teil des Dichtelements bei einer Wärmeausdehnung aufnehmbar ist.

Die Ausgestaltung des Ventils mit einem Hohlraum im Bereich einer Außenseite, d.h. einer (radial) nach außen gerichteten Seite des ringförmigen Dichtelements bietet einen Freiraum für eine temperaturbedingte Verformung (Volumenzuwachs) des Dichtelements, wodurch eine axiale Ausdehnung des Dichtelements reduziert werden kann. Auf diese Weise können mit der axialen Verformung verbundene Dichtigkeitsprobleme verringert bzw. vermieden werden, wodurch das Ventil ein robusteres Schließverhalten aufweist.

Erfindungsgemäß ist der Hohlraum zwischen der Außenseite des Dichtelements und einer der Außenseite des Dichtelements gegenüberliegenden Innenseite des Gehäuses vorgesehen. In einer derartigen Ausgestaltung weist das Dichtelement im Bereich des Hohlraums eine Dichtlippe auf, welche an der Innenseite des Gehäuses anliegt, wodurch sich eine hohe Dichtigkeit des Ventils erzielen lässt.

In einer bevorzugten Ausführungsform weist das Ventil weiter eine innerhalb des Gehäuses angeordnete hohlzylindrische Abstandshülse auf, welche an dem Dichtelement anliegt und das Dichtelement gegen einen Anschlag des Gehäuses andrückt. Auf diese Weise ist das Dichtelement zuverlässig innerhalb des Gehäuses befestigt.

In einer weiteren bevorzugten Ausführungsform liegt die Abstandshülse lediglich im Bereich eines Außenumfangs und im Bereich eines Innenumfangs des Dichtelements an dem Dichtelement an. Hierdurch kann vermieden werden, dass eine Wärmeausdehnung der Abstandshülse (neben der Wärmeausdehnung des Dichtelements) zu einer das Schließverhalten beeinträchtigenden axialen Verformung des Dichtelements insbesondere im Bereich des Innenumfangs führt.

Eine derartige Ausgestaltung kann beispielsweise mit einer Abstandshülse verwirklicht werden, welche in einem an das Dichtelement angrenzenden Bereich eine stufenförmige Querschnittsform aufweist. Das ringförmige Dichtelement kann hierbei ebenfalls eine stufenförmige Querschnittsform mit einem unteren Abschnitt und einem oberen Abschnitt aufweisen, wobei ein Hohlraum im Bereich einer Außenseite des unteren Abschnitts und ein weiterer Hohlraum im Bereich einer Außenseite des oberen Abschnitts vorgesehen ist.

Ein weiteres nicht erfindunggemäβes Ventil weist ein Gehäuse, ein ringförmiges Dichtelement und ein bewegbares Schließelement auf. Das Dichtelement und das Schließelement sind innerhalb des Gehäuses angeordnet. Das Ventil ist durch Anlegen des Schließelements an das Dichtelement verschließbar. Das Ventil zeichnet sich dadurch aus, dass das ringförmige Dichtelement ein O-Ring ist.

Die Ausgestaltung des Dichtelements als O-Ring ermöglicht es ebenfalls, eine temperaturbedingte axiale Ausdehnung des Dichtelements zu verringern, wodurch das Ventil ein robusteres Schließverhalten aufweist. Der O-Ring kann insbesondere gegenüber einem herkömmlichen Dichtelement ein relativ kleines Volumen aufweisen, was eine relativ kleine Wärmeausdehnung zur Folge hat. Auch bietet der O-Ring die Möglichkeit einer Befestigung ohne eine Abstandshülse, wodurch hiermit verbundene Probleme vermieden werden können.

Zur Befestigung wird in einer bevorzugten Ausführungsform vorgeschlagen, das Dichtelement als einen an dem Gehäuse durch Zwei-Komponenten-Spritzgießen angeformten O-Ring vorzusehen. Auf diese Weise ist der O-Ring relativ zuverlässig und stabil an dem Ventilgehäuse fixiert.

Die Erfindung wird im Folgenden anhand der beigefügten Figuren näher erläutert. Es zeigen:
Figur 1 eine schematische seitliche Schnittdarstellung eines Ventils mit einem ringförmigen Dichtelement und Hohlräumen für eine Ausdehnung des Dichtelements;
Figur 2 eine schematische Darstellung eines unteren Bereichs des Ventils von Figur 1 zur Veranschaulichung einer radialen Ausdehnung des Dichtelements;
Figur 3 eine schematische Darstellung des ringförmigen Dichtelements des Ventils von Figur 1 zur Veranschaulichung einer axialen Ausdehnung;
Figur 4 eine schematische seitliche Schnittdarstellung eines weiteren Ventils mit einem ringförmigen Dichtelement und Hohlräumen für eine Ausdehnung des Dichtelements;
Figur 5 eine schematische seitliche Schnittdarstellung eines weiteren Ventils mit einem O-Ring als Dichtelement; und
Figur 6 eine schematische Darstellung eines unteren Bereichs des Ventils von Figur 5 zur Veranschaulichung einer axialen Ausdehnung des O-Rings.

Anhand der folgenden Figuren werden mögliche Ausgestaltungen von elektrisch ansteuerbaren Ventilen beschrieben. Die Ventile, welche beispielsweise in einem Kühlmittelkreislauf eines Kraftfahrzeugs zum Einsatz kommen können, zeichnen sich durch ein robustes Schließverhalten aus, welches selbst bei temperaturbedingten Verformungen von Ventilkomponenten gewährleistet ist.

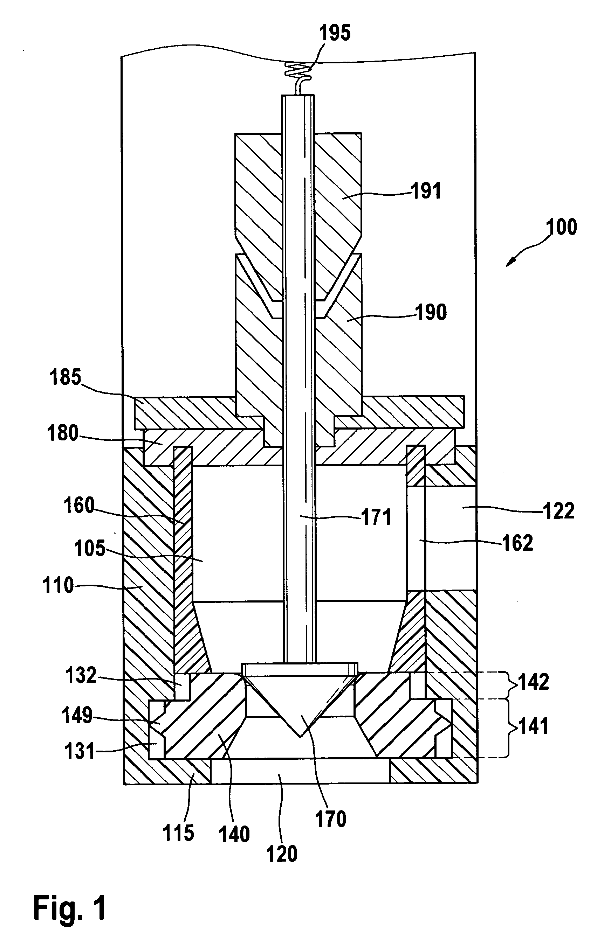

Figur 1 zeigt eine schematische seitliche Schnittdarstellung eines Ventils 100. Das Ventil 100 weist ein Gehäuse 110 auf, welches einen im Wesentlichen hohlzylinderförmigen Innenraum 105 umschließt. An dem Gehäuse 110, welches zum Beispiel ein Kunststoffmaterial aufweist, sind eine untere Anschlussöffnung 120 und eine seitliche Anschlussöffnung 122 vorgesehen. Über die asymmetrisch angeordneten Anschlussöffnungen 120, 122 ist der Innenraum 105 des Ventilgehäuses für ein Medium zugänglich. Im Hinblick auf den oben beschriebenen Kühlmittelkreislauf eines Kraftfahrzeugs wird zum Beispiel die untere Anschlussöffnung 120 zum Zuführen einer (über eine Pumpe geförderten) Kühlflüssigkeit, und die seitliche Anschlussöffnung 122 zum Abführen der Kühlflüssigkeit eingesetzt (nicht dargestellt).

In dem Innenraum 105 weist das Ventil 100 weiter ein ringförmiges Dichtelement 140, im Folgenden als Dichtring 140 bezeichnet, und ein mit dem Dichtring 140 zusammenwirkendes Schließelement 170 auf, welches als Dichtkegel 170 ausgebildet ist. Der Dichtkegel 170 umfasst zum Beispiel ein metallisches Material, beispielsweise Messing. Der Dichtring 140, welcher aus einem elastisch verformbaren Material wie insbesondere einem Elastomermaterial gebildet ist, weist im Querschnitt an jeder Seite jeweils eine stufenförmige Gestalt mit einem unteren Abschnitt 141 und einem schmaleren oberen Abschnitt 142 auf. Der obere Abschnitt 142 weist oberseitig im Bereich eines Innenumfangs des Dichtrings 140 eine abgerundete Kontur auf. In diesem Bereich kann der Dichtkegel 170 wie in Figur 1 dargestellt an dem Dichtring 140 anliegen, wodurch das Ventil 100 geschlossen ist. Der untere Abschnitt 141 des Dichtrings 140 weist im Bereich des Innenumfangs eine in Richtung der unteren Anschlussöffnung 120 aufweitende Form auf. Weitere Detail zur Ausgestaltung des Dichtrings 140 werden weiter unten näher erläutert.

Zum Fixieren des Dichtrings 140 innerhalb des Gehäuses 110 weist das Ventil 100 eine an der Innenseite des Gehäuses 110 anliegende hohlzylindrische Abstandshülse 160 auf, welche beispielsweise aus einem Kunststoffmaterial gebildet ist. Mit Hilfe der Abstandshülse 160 ist der Dichtring 140 gegen einen im Bereich der unteren Anschlussöffnung 120 vorliegenden Anschlag 115 des Gehäuses 110 verspannt. Die Abstandshülse 160 weist wie in Figur 1 angedeutet eine seitliche Öffnung 162 auf, welche auf die seitliche Anschlussöffnung 122 des Gehäuses 100 abgestimmt ist, so dass ein Volumenstrom aus dem Gehäuseinnenraum 105 über die Anschlussöffnung 122 ermöglicht wird. Auch weist die Abstandshülse 160 in einem an den Dichtring 140 angrenzenden Abschnitt im Querschnitt eine sich in Richtung des Dichtrings 140 verbreiternde Form auf.

An einer Oberseite des Gehäuses 110 weist das Ventil 100 eine Anschlussplatte 185 auf, welche mit Befestigungsmitteln wie zum Beispiel Schrauben (nicht dargestellt) an dem Gehäuse 110 befestigt ist. An einer Unterseite der Anschlussplatte 185 ist eine Dichtmanschette 180 vorgesehen, welche auf der Abstandshülse 160 aufliegt und die Abstandshülse 160 in Richtung des Dichtrings 140 drückt, wodurch die oben beschriebene Verspannung des Dichtrings 140 gegen den Anschlag 115 bewirkt wird.

Der mit dem Dichtring 140 zusammenwirkende Dichtkegel 170 ist mit einer Hubstange 171 verbunden bzw. an der Hubstange 171 angeformt. Die Hubstange 171 ist verschiebbar gelagert, so dass das Ventil 100 geschlossen und geöffnet bzw. ein Volumenstrom durch das Ventil 100 über die Anschlussöffnungen 120, 122 gesteuert werden kann. In der in Figur 1 gezeigten Position, in welcher der Dichtkegel 170 an dem Dichtring 140 anliegt, ist das Ventil 100 geschlossen, so dass kein Volumenstrom zwischen den Anschlussöffnungen 120, 122 möglich ist.

Die Hubstange 171 tritt oberseitig aus dem Ventilgehäuse 110 durch die Dichtmanschette 180 aus. Die Dichtmanschette 180 kann im Bereich der Hubstange 171 als Dichtbuchse ausgeführt sein bzw. eine solche Dichtbuchse umfassen, um die Durchführung der Hubstange 171 abzudichten. An einem oberen Ende ist die Hubstange 171 mit einer Zugfeder 195 verbunden, welche eine den Dichtkegel 170 von dem Dichtring 140 wegziehende und damit das Ventil 100 öffnende Kraft auf die Hubstange 171 ausübt.

Zum Bewegen der Hubstange 171 und damit des Dichtkegels 170 in Richtung des Dichtrings 140 und infolgedessen zum Schließen des Ventils 100 weist das Ventil 100 ein Joch 190 und einen Anker 191 auf, welche beide im Wesentlichen zylinderförmig ausgeführt sein können. Hierbei ist die Hubstange 171 in mittiger Lage durch das Joch 190 geführt, und ist der Anker 191 in einem oberen Bereich der Hubstange 171 umfangsseitig an dieser befestigt. Das Joch 190, welches oberseitig zu dem Gehäuse 110 vorgesehen und an der Anschlussplatte 185 angeordnet bzw. befestigt ist, weist an einer Oberseite eine konusartigen Ausnehmung auf. Der Anker 191 weist an einer Unterseite einen kegelförmigen Abschnitt auf, welcher in seiner Kontur im Wesentlichen der Kontur des konusartigen Bereichs des Jochs 190 entspricht.

Anker 191 und Joch 190 sind derart ausgebildet, dass zwischen diesen Komponenten eine elektromagnetische Anziehungskraft erzeugt werden kann, um den an der Hubstange 171 befestigten Anker 191 in Richtung des Jochs 190 zu ziehen und infolgedessen den Dichtkegel 170 in Richtung des Dichtrings 140 zu verschieben. Zu diesem Zweck kann beispielsweise der Anker 191 als elektrisch ansteuerbarer Elektromagnet, und das Joch 190 als Permanentmagnet ausgebildet sein. Die elektromagnetische Kraft zwischen Anker 191 und Joch 190 wirkt hierbei gegen die Zugkraft der Feder 195 und gegen einen (durch eine Pumpe erzeugten und auf die unterseitige Anschlussöffnung 120 wirkenden) Druck eines Mediums bzw. Kühlmittels. Über die elektromagnetische Anziehungskraft bzw. eine Variation derselben kann daher das Öffnen und Schließen des Ventils 100 gesteuert werden. Selbst im geschlossenen Zustand des Ventils ist wie in Figur 1 dargestellt ein Restabstand zwischen Anker 191 und Joch 190 vorgesehen, um beispielsweise Bauteiltoleranzen auszugleichen.

Das Ventil 100 zeichnet sich durch ein robustes Schließverhalten aus, was insbesondere bei hohen Temperaturen bzw. Temperaturänderungen und einer hiermit verbundenen Wärmeausdehnung (Volumenzuwachs) des Dichtrings 140 gewährleistet ist. Hohe Temperaturen können durch das das Ventil 100 durchströmende Medium hervorgerufen werden. Für den Fall des oben genannten Kühlmittelkreislaufs eines Kraftfahrzeugs kann sich das eingesetzte Kühlmittel beispielsweise bis auf eine Temperatur von etwa 110°C aufwärmen.

Für ein zuverlässiges Schließverhalten weist das Ventil 100 im Bereich einer Außenseite des Dichtrings 140, d.h. einer (radial) nach außen gerichteten Seite, einen an den unteren Dichtringabschnitt 141 angrenzenden unteren Hohlraum 131 und einen an den oberen Dichtringabschnitt 142 angrenzenden oberen Hohlraum 132 auf. Die Hohlräume 131, 132 bieten einen Freiraum für eine temperaturbedingte radiale Verformung des Dichtelements 140, wodurch eine axiale Ausdehnung des Dichtrings 140 im Unterschied zu einem herkömmlichen Ventil weitgehend unterdrückt werden kann. Für den unteren Hohlraum 131 ist in dem Gehäuse 110 im Bereich des Anschlags 115 eine die Gehäuseinnenseite (radial) umlaufende Aussparung bzw. Nut ausgebildet, welche von einem Teil des unteren Dichtringabschnitts 141 ausgefüllt wird. Auf diese Weise kann (zusätzlich zum Einsatz der Abstandshülse 160) eine (teilweise) Fixierung des Dichtrings 140 erzielt werden. Hierbei wird der untere Hohlraum 131 von dem Dichtring 140 und der Innenseite des Gehäuses 110 begrenzt. Der obere Hohlraum 132 wird hingegen von dem Dichtring 140, der dem Dichtring 140 bzw. Dichtringabschnitt 142 gegenüberliegenden Gehäuseinnenseite und zusätzlich einem Teil der Abstandshülse 160 begrenzt.

Der untere Dichtringsabschnitt 141 ist außenseitig zusätzlich mit einer umlaufenden Dichtlippe 149 versehen, welche an der Innenseite des Gehäuses 110 anliegt, um eine hohe Dichtigkeit des Ventils 100 zu gewährleisten. Auf diese Weise wird der untere Hohlraum 131 in zwei "Teilräume" unterteilt. Eine derartige Dichtlippe kann zusätzlich oder alternativ auch an dem oberen Dichtringabschnitt 142 vorgesehen werden (nicht dargestellt).

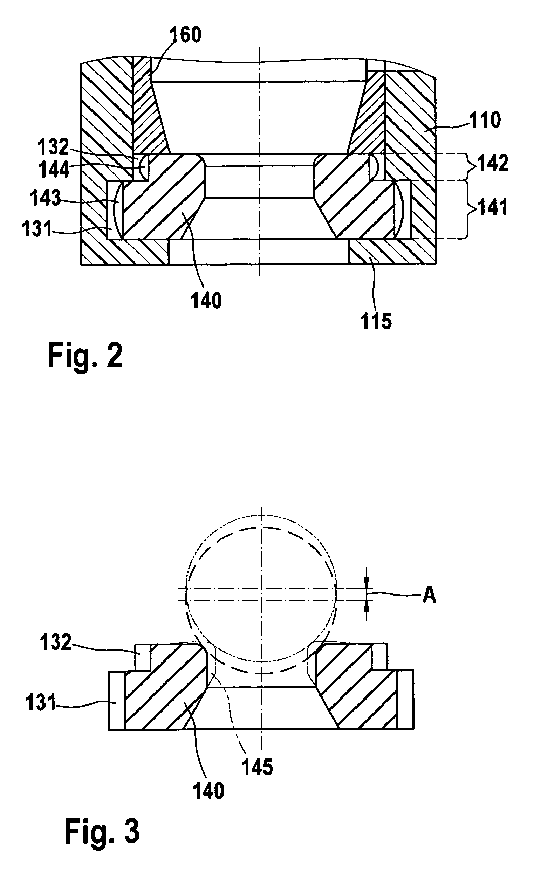

Die Hohlräume 131, 132 dienen wie vorstehend beschrieben dazu, einen Teil des Dichtrings 140 bei einer temperaturbedingten radialen Ausdehnung aufzunehmen. Eine derartige Ausdehnung ist in der schematischen Ausschnittsdarstellung eines unteren Bereichs des Ventils 100 von Figur 2 anhand von Verformungen 143, 144 des unteren und oberen Dichtringabschnitts 141, 142 angedeutet, wobei auf die Darstellung der Dichtlippe 149 verzichtet wurde. Die radialen Verformungen 143, 144 können hierbei in den Hohlräumen 131, 132 aufgenommen werden, wodurch eine axiale Verformung des Dichtrings 140 relativ klein ausfällt.

Zur Veranschaulichung zeigt Figur 3 eine bei einer Wärmeausdehnung des Dichtrings 140 auftretende Aufwölbung bzw. Verformung 145 des Dichtrings 140. Die Verformung 145 tritt oberseitig aufgrund der weiter außen am Dichtring 140 anliegenden Abstandshülse 160 insbesondere im Bereich des Innenumfangs des Dichtrings 140 auf, somit an einer Stelle, an welcher der Dichtkegel 170 (bei geschlossenem Ventil 100) an dem Dichtring 140 anliegt. Die Verformung 145 ist mit einer axialen Ausdehnung A verbunden, wie anhand von verschobenen gestrichelten Kreisen verdeutlicht wird. Durch die axiale Ausdehnung A wird der an dem Dichtring 140 anliegende Dichtkegel 170 (und damit die Hubstange 171 und der Anker 191 gegenüber dem Joch 190) axial verschoben, wodurch sich der Restabstand zwischen Anker 191 und Joch 190 erhöht.

Aufgrund der durch die Hohlräume 131, 132 geschaffenen radialen Wärmeausdehnungsmöglichkeit des Dichtrings 140 ist die temperaturbedingte Verformung 145 und damit die axiale Verschiebung A bei dem Ventil 100 relativ klein. Im Gegensatz hierzu ist bei einem herkömmlichen Ventil ohne Hohlräume keine derartige radiale Ausdehnungsmöglichkeit für einen Dichtring gegeben, wodurch eine wesentlich größere axiale Verformung und damit Erhöhung des Restabstands zwischen Anker und Joch auftritt. Die Erhöhung des Restabstands hat jedoch eine Verminderung der elektromagnetischen Anziehungskraft zur Folge, welche bei einem herkömmlichen Ventil ein solches Ausmaß annehmen kann, dass das Ventil undicht wird.

Der mit dem Einsatz der Hohlräume 131, 132 verbundene Effekt wird durch die folgenden beispielhaften Angaben verdeutlicht, welche anhand von Versuchen und Simulationen an einem herkömmlichen Ventil und einem Ventil mit einem Aufbau entsprechend des Ventils 100 von Figur 1 gewonnen wurden. Bei einer Erwärmung von Raumtemperatur auf eine Temperatur von 110°C betrug eine bei dem herkömmlichen Ventil (ohne Hohlräume) auftretende axiale Ausdehnung 0,17mm, wohingegen die Ausdehnung bei dem mit Hohlräumen ausgestatteten Ventil lediglich 0,06mm betrugen. Durch eine derartige "Minimierung" der axialen Verformung konnte eine "Erhöhung" der Magnetkraft zwischen Anker und Joch von etwa 1,5N bewirkt werden.

Neben dem Bereitstellen einer Wärmeausdehnungsmöglichkeit für den Dichtring 140 sind die Hohlräume 131, 132 des Ventils 100 ferner dazu geeignet, um beispielsweise Bauteiltoleranzen (insbesondere der Abstandshülse 160) und eine hiermit verbundene Verformung des Dichtelements 140 zu reduzieren. Aufgrund der durch die Hohlräume 131, 132 gegebenen Ausdehnungs- bzw. Verformungsmöglichkeit des Dichtrings 140 kann gegebenenfalls auch eine mögliche Schiefstellung von Dichtkegel 170 und Hubstange 171 ausgeglichen werden.

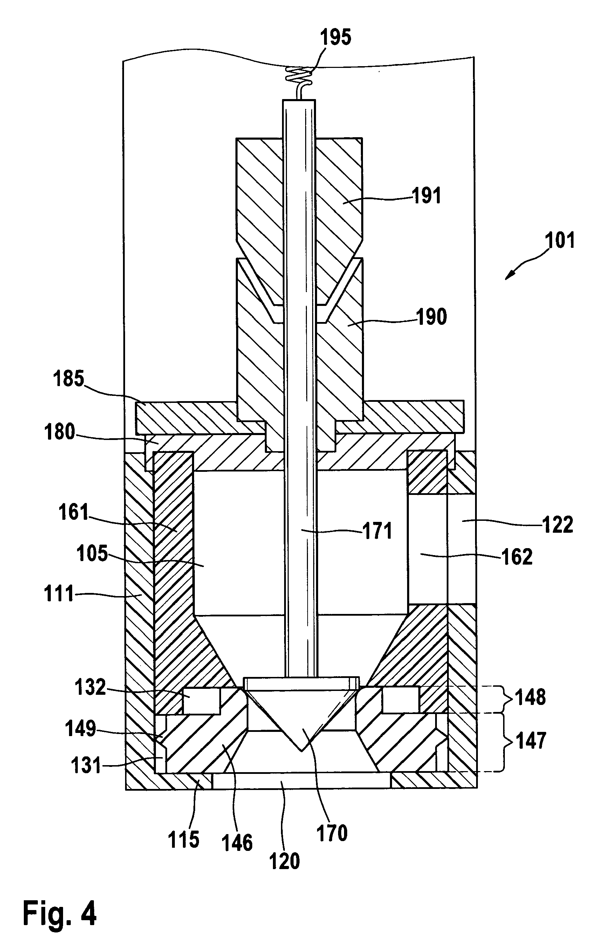

Figur 4 zeigt eine schematische seitliche Schnittdarstellung eines weiteren Ventils 101, welches im Wesentlichen den gleichen Aufbau aufweist wie das in Figur 1 dargestellte Ventil 100. Für Details zur Funktionsweise und zu übereinstimmenden Ventilkomponenten wird daher auf die obigen Ausführungen verwiesen.

Das Ventil 101 weist ein Ventilgehäuse 111 mit asymmetrisch angeordneten Anschlussöffnungen 120, 122 auf, welches einen hohlzylinderförmigen Innenraum 105 umschließt. In dem Innenraum 105 ist ein elastisch verformbarer Dichtring 146 angeordnet, welcher zur Fixierung innerhalb des Gehäuses 111 durch eine Abstandshülse 161 gegen einen Anschlag des Gehäuses 115 verspannt ist. In der Abstandshülse 161 ist eine mit der Anschlussöffnung 122 korrespondierende Öffnung 162 vorgesehen. Der Dichtring 146 weist eine stufenförmige Querschnittsform mit einem unteren Abschnitt 147 und einem schmaleren oberen Abschnitt 148 auf. Ebenfalls vorgesehen sind ein unterer und oberer Hohlraum 131, 132 außenseitig des Dichtrings 146, um eine radiale Wärmeausdehnungsmöglichkeit für den Dichtring 146 zu schaffen und infolgedessen eine axiale Ausdehnung des Dichtrings 146 entsprechend dem Ventil 100 von Figur 1 möglichst zu unterdrücken.

Im Unterschied zu dem Ventil 100 weist das Gehäuse 111 des Ventils 101 im Bereich des Anschlags 115 keine umlaufende Aussparung für den unteren Hohlraum 131 auf. Der untere Hohlraum 131 wird daher von dem Dichtring 146 bzw. Dichtringabschnitt 147, der Gehäuseinnenseite und zusätzlich einem Teil der Abstandshülse 161 begrenzt. Hierbei kann der Dichtringabschnitt 147 wie in Figur 4 dargestellt erneut eine an der Gehäuseinnenseite anliegende umlaufende Dichtlippe 149 aufweisen.

Des weiteren ist die Abstandshülse 161 bzw. der sich in Richtung des Dichtrings 146 aufweitende untere Abschnitt der Abstandshülse 161 an der Unterseite (im Querschnitt) mit einer Stufe versehen, so dass der obere Hohlraum 132 lediglich zwischen dem Dichtring 146 und der Abstandshülse 161 vorliegt. Der untere stufenförmige Abschnitt der Abstandshülse 161 sowie die Stufenform des Dichtrings 146 ermöglichen dabei, dass die Abstandshülse 161 an der Oberseite des Dichtrings 146 lediglich im Bereich des Außenumfangs und insbesondere des Innenumfangs anliegt. Hierdurch kann wirksam vermieden werden, dass eine temperaturbedingte Längsausdehnung der Abstandshülse 161 eine das Schließverhalten beeinträchtigende Aufwölbung bzw. axiale Verformung des Dichtrings 146 im Bereich des Innenumfangs hervorruft.

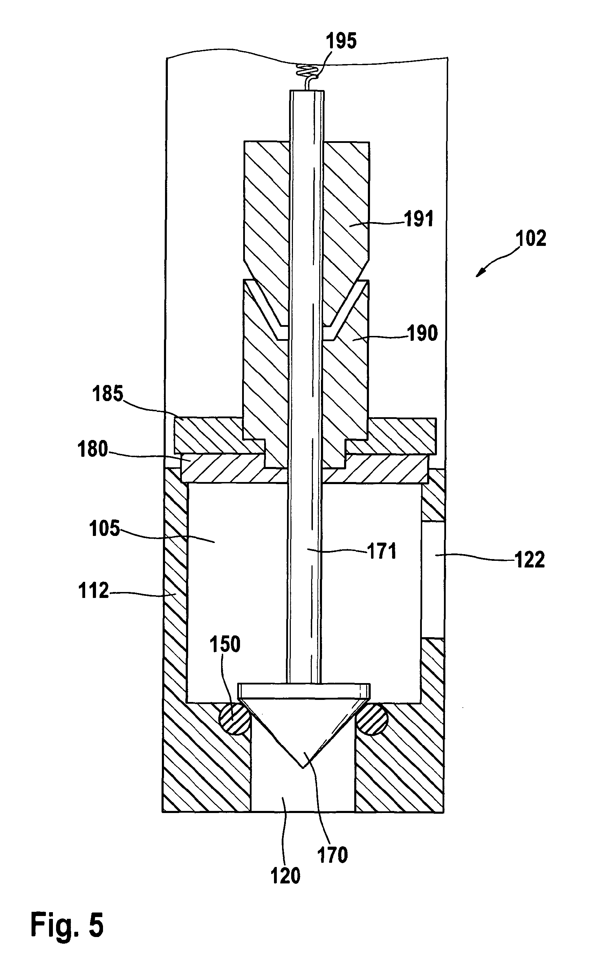

Figur 5 zeigt eine schematische seitliche Schnittdarstellung eines weiteren Ventils 102, welches hinsichtlich des Aufbaus weitgehend mit den Ventilen 100, 101 der Figuren 1 und 4 übereinstimmt. Für Details zur Funktionsweise und zu übereinstimmenden Ventilkomponenten wird daher auf die obigen Ausführungen verwiesen.

Das Ventil 102 weist ein Ventilgehäuse 112 mit asymmetrisch angeordneten Anschlussöffnungen 120, 122 auf, welches einen hohlzylinderförmigen Innenraum 105 umschließt. In dem Innenraum 105 ist ein ringförmiges, elastisch verformbares Dichtelement 150 vorgesehen, welches mit einem an einer Hubstange 171 angeformten bzw. befestigten Dichtkegel 170 zum Schließen des Ventils 102 zusammenwirkt. Die Hubstange 171, welche verschiebbar gelagert ist, tritt an einer Oberseite des Gehäuses 112 aus, an welcher das Gehäuse 112 mit einer Anschlussplatte 185 und einer Dichtmanschette 180 verschlossen ist. An einem oberen Ende ist die Hubstange 171 mit einer Zugfeder 195 verbunden. Zum Betätigen des Ventils 102 ist ein an der Gehäuseoberseite angeordnetes Joch 190 und ein an der Hubstange 171 befestigter Anker 191 vorgesehen, zwischen welchen eine elektromagnetische Anziehungskraft gegen die Zugkraft der Feder 195 und gegen einen (durch eine Pumpe erzeugten und auf die unterseitige Anschlussöffnung 120 wirkenden) Druck eines Mediums bzw. Kühlmittels erzeugt werden kann.

Das ringförmige Dichtelement 150 des Ventils 102 ist im Unterschied zu den Ventilen 101, 102 der Figuren 1 und 4 als O-Ring 150 ausgebildet. Der O-Ring 150 ist hierbei an der "Kante" einer Stufe bzw. eines Absatzes innerhalb des Gehäuses 112 in einem Bereich oberhalb der Anschlussöffnung 120 vorgesehen. Der O-Ring 150 kann mit relativ kleinen Abmessungen bzw. mit einem relativ geringen Volumen verwirklicht werden. Infolgedessen sind auch eine temperaturbedingte Ausdehnung (welche etwa proportional zum Volumen ist) und damit eine axiale Verformung relativ klein.

Der Einsatz des O-Rings 150 bietet des weiteren die Möglichkeit einer Befestigung ohne eine Abstandshülse, so dass sich mit einer Abstandshülse verbundene Probleme wie insbesondere eine Bauteiltoleranz und eine temperaturbedingte Längsausdehnung, durch welche ein Dichtelement bzw. -ring (axial) verformt werden kann, vermeiden lassen. Für eine zuverlässige und stabile Fixierung wird der O-Ring 150 vorzugsweise gemeinsam mit dem Gehäuse 112 durch Durchführen eines Zwei-Komponenten-Spritzgießen-Verfahrens hergestellt. Hierbei werden beispielsweise für den O-Ring 150 ein Elastomer, und für das Gehäuse 112 ein Thermoplast verwendet.

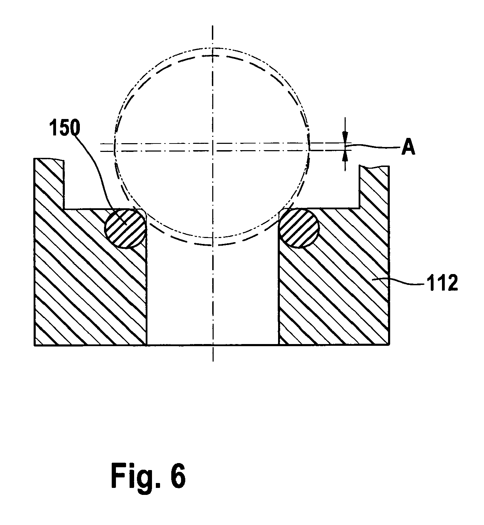

Zur Veranschaulichung des Einsatzes des O-Rings 150 ist in Figur 6 eine Wärmeausdehnung des O-Rings 150 sowie deren axiale Komponente A (angedeutet anhand von verschobenen gestrichelten Kreisen) dargestellt. Anhand von Versuchen und Simulationen an einem Ventil mit einem Aufbau entsprechend des Ventils 102 von Figur 5 wurde eine axiale Ausdehnung des betreffenden O-Rings bei einer Erwärmung von Raumtemperatur auf eine Temperatur von 110°C von lediglich 0,02mm ermittelt, welche somit wesentlich kleiner ist als die an einem herkömmlichen Ventil gewonnene Verformung von 0,17mm (siehe oben). Eine temperaturbedingte Abnahme der Magnetkraft zwischen Anker und Joch wird daher im Wesentlichen vermieden.

Die anhand der Figuren 1-4 beschriebenen Ausführungsformen von Ventilen stellen bevorzugte bzw. beispielhafte Ausführungsformen der Erfindung dar. Anstelle der beschriebenen Ausführungsform sind weitere Ausführungsformen vorstellbar, welche weitere Abwandlungen von Ventilen umfassen können, bei denen an Außenseiten von ringförmigen Dichtelementen Hohlräume vorgesehen sind bzw. bei denen O-Ring-Dichtungen zum Einsatz kommen. Im Hinblick auf das Vorsehen von außenseitigen Hohlräumen sind insbesondere ringförmige Dichtelemente vorstellbar, welche (im Querschnitt) eine andere Form aufweisen können als die Dichtringe 140, 146. Auch sind die genannten Materialien von Ventilkomponenten als Beispiele anzusehen, welche durch andere Materialien ersetzt werden können.

## Patentansprüche

1. Ventil aufweisend ein Gehäuse (110, 111), ein ringförmiges Dichtelement (140, 146) und ein bewegbares Schließelement (170), wobei das Dichtelement (140, 146) und das Schließelement (170) innerhalb des Gehäuses angeordnet (110, 111) sind, wobei das Ventil durch Anlegen des Schließelements (170) an das Dichtelement (140, 146) verschließbar ist, wobei ein Hohlraum (131, 132) im Bereich einer Außenseite des Dichtelements (140, 146) vorgesehen ist, in welchen ein Teil (143, 144) des Dichtelements (140, 146) bei einer Wärmeausdehnung aufnehmbar ist, wobei der Hohlraum (131, 132) zwischen der Außenseite des Dichtelements (140, 146) und einer der Außenseite des Dichtelements (140, 146) gegenüberliegenden Innenseite des Gehäuses (110, 111) vorgesehen ist,
**dadurch gekennzeichnet,dass**
das Dichtelement (140, 146) im Bereich des Hohlraums (131) eine Dichtlippe (149) aufweist, welche an der Innenseite des Gehäuses (110, 111) anliegt, wodurch der Hohlraum (131) in zwei Teilräume unterteilt ist.

2. Ventil nach Anspruch 1, **gekennzeichnet durch** weiter aufweisend eine innerhalb des Gehäuses (110, 111) angeordnete hohlzylindrische Abstandshülse (160, 161), welche an dem Dichtelement (140, 146) anliegt und das Dichtelement (140, 146) gegen einen Anschlag (115) des Gehäuses (110, 111) andrückt.

3. Ventil nach Anspruch 2, **dadurch gekennzeichnet dass** die Abstandshülse (161) lediglich im Bereich eines Außenumfangs und im Bereich eines Innenumfangs des Dichtelements (146) an dem Dichtelement (146) anliegt.

4. Ventil nach einem der vorhergehenden Ansprüche, **dadurch gekennzeichnet dass** das ringförmige Dichtelement (140, 146) eine stufenförmige Querschnittsform mit einem unteren Abschnitt (141, 147) und einem oberen Abschnitt (142, 148) aufweist, wobei ein Hohlraum (131) im Bereich einer Außenseite des unteren Abschnitts (141, 147) und ein weiterer Hohlraum (132) im Bereich einer Außenseite des oberen Abschnitts (142, 148) vorgesehen ist.

5. Ventil nach einem der vorhergehenden Ansprüche, **dadurch gekennzeichnet** weiter aufweisend ein an dem Gehäuse (110, 111) angeordnetes Joch (190) und ein mit dem Schließelement (170) verbundener Anker (191), wobei durch eine elektromagnetische Wechselwirkung zwischen dem Anker (191) und dem Joch (190) der Anker (191) in Richtung des Jochs (190) bewegbar und damit das Schließelement (170) an dem Dichtelement (140, 146) anlegbar ist.

6. Ventil nach einem der vorhergehenden Ansprüche, **dadurch gekennzeichnet dass** das Dichtelement (140, 146) aus einem elastisch verformbaren Material, insbesondere einem Elastomermaterial, gebildet ist.

7. Ventil nach einem der vorhergehenden Ansprüche, **dadurch gekennzeichnet dass** das Schließelement (170) als Dichtkegel ausgebildet Ist.

## Claims

1. Valve comprising a housing (110, 111), an annular sealing element (140, 146) and a movable closing element (170), wherein the sealing element (140, 146) and the closing element (170) are arranged within the housing (110, 111), wherein the valve can be closed by placing the closing element (170) against the sealing element (140, 146), wherein a cavity (131, 132) is provided in the region of an outer side of the sealing element (140, 146), in which cavity a part (143, 144) of the sealing element (140, 146) can be received during a thermal expansion, wherein the cavity (131, 132) is provided between the outer side of the sealing element (140, 146) and an inner side of the housing (110, 111) that is situated opposite the outer side of the sealing element (140, 146), **characterized in that** the sealing element (140, 146) has, in the region of the cavity (131), a sealing lip (149) which bears against the inner side of the housing (110, 111), with the result that the cavity (131) is subdivided into two sub-cavities.

2. Valve according to Claim 1, **characterized by** further comprising a hollow-cylindrical spacer sleeve (160, 161) arranged inside the housing (110, 111), which sleeve bears against the sealing element (140, 146) and presses the sealing element (140, 146) against an end stop (115) of the housing (110, 111).

3. Valve according to Claim 2, **characterized in that** the spacer sleeve (161) bears against the sealing element (146) only in the region of an outer circumference and in the region of an inner circumference of the sealing element (146).

4. Valve according to one of the preceding claims, **characterized in that** the annular sealing element (140, 146) has a stepped cross-sectional shape with a lower portion (141, 147) and an upper portion (142, 148), wherein one cavity (131) is provided in the region of an outer side of the lower portion (141, 147) and a further cavity (132) is provided in the region of an outer side of the upper portion (142, 148).

5. Valve according to one of the preceding claims, **characterized by** further comprising a yoke (190) arranged on the housing (110, 111) and an armature (191) connected to the closing element (170), wherein the armature (191) can be moved in the direction of the yoke (190) through an electromagnetic interaction between the armature (191) and the yoke (190), and the closing element (170) can thus be placed against the sealing element (140, 146).

6. Valve according to one of the preceding claims, **characterized in that** the sealing element (140, 146) is formed from an elastically deformable material, in particular an elastomer material.

7. Valve according to one of the preceding claims, **characterized in that** the closing element (170) is designed as a sealing cone.

## Revendications

1. Soupape comprenant un boîtier (110, 111), un élément d'étanchéité annulaire (140, 146) et un élément de fermeture mobile (170), l'élément d'étanchéité (140, 146) et l'élément de fermeture (170) étant disposés à l'intérieur du boîtier (110, 111), la soupape pouvant être fermée par application de l'élément de fermeture (170) contre l'élément d'étanchéité (140, 146), un espace creux (131, 132) étant prévu dans la région d'un côté extérieur de l'élément d'étanchéité (140, 146), dans lequel espace creux peut être reçue une partie (143, 144) de l'élément d'étanchéité (140, 146) lors d'une dilatation thermique, l'espace creux (131, 132) étant prévu entre le côté extérieur de l'élément d'étanchéité (140, 146) et un côté intérieur du boîtier (110, 111) opposé au côté extérieur de l'élément d'étanchéité (140, 146),
**caractérisée en ce que**
l'élément d'étanchéité (140, 146) comprend une lèvre d'étanchéité (149) dans la région de l'espace creux (131), laquelle lèvre d'étanchéité s'applique contre le côté intérieur du boîtier (110, 111), de sorte que l'espace creux (131) soit divisé en deux espaces partiels.

2. Soupape selon la revendication 1, **caractérisée en ce qu'**elle comprend en outre une douille d'écartement (160, 161) cylindrique creuse disposée à l'intérieur du boîtier (110, 111), laquelle s'applique contre l'élément d'étanchéité (140, 146) et presse l'élément d'étanchéité (140, 146) contre une butée (115) du boîtier (110, 111).

3. Soupape selon la revendication 2, **caractérisée en ce que** la douille d'écartement (161) s'applique contre l'élément d'étanchéité (146) seulement dans la région d'une périphérie extérieure et dans la région d'une périphérie intérieure de l'élément d'étanchéité (146).

4. Soupape selon l'une quelconque des revendications précédentes, **caractérisée en ce que** l'élément d'étanchéité annulaire (140, 146) présente une forme étagée en section transversale comprenant une portion inférieure (141, 147) et une portion supérieure (142, 148), un espace creux (131) étant prévu dans la région d'un côté extérieur de la portion inférieure (141, 147) et un espace creux supplémentaire (132) étant prévu dans la région d'un côté extérieur de la portion supérieure (142, 148).

5. Soupape selon l'une quelconque des revendications précédentes, **caractérisée en ce qu'**elle comprend en outre une culasse (190) disposée sur le boîtier (110, 111) et une armature (191) reliée à l'élément de fermeture (170), l'armature (191) pouvant être déplacée en direction de la culasse (190) par une interaction électromagnétique entre l'armature (191) et la culasse (190) et l'élément de fermeture (170) pouvant ainsi être appliqué contre l'élément d'étanchéité (140, 146).

6. Soupape selon l'une quelconque des revendications précédentes, **caractérisée en ce que** l'élément d'étanchéité (140, 146) est formé d'un matériau déformable élastiquement, en particulier d'un matériau élastomère.

7. Soupape selon l'une quelconque des revendications précédentes, **caractérisée en ce que** l'élément de fermeture (170) est réalisé sous forme de cône d'étanchéité.
